# EUROPÄISCHE PATENTSCHRIFT

(11) **EP 3 453 241 B1**
(45) Veröffentlichungstag und Bekanntmachung des Hinweises auf die Patenterteilung: **20.11.2024**
(21) Anmeldenummer: 18401077.5
(22) Anmeldetag: 28.08.2018
(51) Int. Cl.: A01C 21/00, A01C 17/00

(54) **VERFAHREN ZUM AUSBRINGEN VON STREUGUT**
METHOD FOR DISTRIBUTING SPREAD GOODS
PROCÉDÉ D'ÉPANDAGE D'UN PRODUIT D'ÉPANDAGE

(30) Priorität: 11.09.2017 DE 102017120871
(43) Veröffentlichungstag der Anmeldung: 13.03.2019
(73) Patentinhaber: Amazonen-Werke H. Dreyer SE & Co. KG, 49205 Hasbergen (DE)
(72) Erfinder: Rahe, Florian, 49504 Lotte (DE)

(56) Entgegenhaltungen:
- EP-A1- 3 241 420
- DE-A1- 102011 009 761
- DE-A1- 102014 103 968

## Beschreibung

Die Erfindung betrifft ein Verfahren zum Ausbringen von Streugut nach dem Oberbegriff des Patenanspruchs 1, ein Streugerät nach dem Oberbegriff des Patentanspruchs 12 und eine Ausbringkombination nach dem Oberbegriff des Patentanspruchs 13.

Zur Vermeidung von Überlappungen und/oder Auslassungen beim Ausbringen von Streugut verfügen moderne Streugeräte, wie beispielsweise Düngerstreuer, über eine sogenannte Teilbreitenschaltung, mittels welcher die Streubreite der Schleuderscheiben und somit die Arbeitsbreite des Streugeräts verändert werden kann. Bei einer Teilbreitenschaltung wird die maximale Streubreite einer Schleuderscheibe oder die maximale Arbeitsbreite eines Streugeräts in mehrere Teilbreiten unterteilt, wobei einzelne oder mehrere Teilbreiten von der Streugutausbringung temporär ausgeschlossen werden können. Einzelne Teilbreiten können somit bei der Ausbringung von Streugut unabhängig voneinander ein- oder ausgeschaltet werden.

Insbesondere bei schräg in das Streubild des Streugeräts hineinlaufenden Streugrenzen, beispielsweise im Bereich von Feldkanten oder im Vorgewende, ist die Streubreitenanpassung an den Schleuderscheiben unbedingt notwendig, um eine Fehlausbringung zu vermeiden. Die Präzision dieser Art der Ausbringsteuerung hängt jedoch stark von dem Schaltzeitpunkt ab, an welchem einzelne Teilbreiten einer Teilbreitenschaltung ein- oder ausgeschaltet werden. Damit die Ein- oder Ausschaltung einzelner oder mehrerer Teilbreiten zu einem geeigneten Zeitpunkt erfolgt, ist ein Schaltabstand des Düngerstreuers zu der Streugrenze zu ermitteln.

Aus dem Stand der Technik sind bereits unterschiedliche Lösungsansätze zur Ermittlung geeigneter Schaltabstände bekannt. Beispielsweise offenbart die Druckschrift EP 2 417 848 A2 bzw. DE 10 2011 009 761 A1 ein Verfahren, bei welchem die Einstellparameter für die Ausbringung von Streugut an Übergangspunkten umgeschaltet werden, wobei die Bestimmung der Streugeräts im Feldinneren sowie einem empirisch ermittelten und die Flugeigenschaften des Düngers charakterisierenden Kennwert erfolgt. Diese und andere bekannte Verfahren zum Ausbringen von Streugut können den steigenden Anforderungen an die Ausbringpräzision nicht mehr gerecht werden und/oder bedingen ein aufwendiges Steuerungsverfahren, dessen Implementierung zeit- und kostenaufwendig ist.

Die Aufgabe der Erfindung besteht somit darin, die Anpassung der Streubreite beim Ausbringen von Streugut zu verbessern und/oder zu vereinfachen.

Die Aufgabe wird gelöst durch ein Verfahren der eingangs genannten Art, wobei der zumindest eine Schaltabstand in Abhängigkeit einer Wurfrichtung der zumindest einen Schleuderscheibe des Streugeräts durch das Stregerät oder durch eine das Streugerät und ein das Streugerät ziehendes oder tragendes Fahrzeug umfassende Ausbringkombination ermittelt wird, wobei die Wurfrichtung, in deren Abhängigkeit der zumindest eine Schaltabstand ermittelt wird, eine eingestellte Soll-Wurfrichtung der zumindest einen Schleuderscheibe des Streugeräts oder eine aktuelle Ist-Wurfrichtung der zumindest einen Schleuderscheibe des Streugeräts ist.

Die Erfindung macht sich die Erkenntnis zunutze, dass die Wurfrichtung einer Schleuderscheibe ein Parameter ist, welcher die Streugutverteilung in einem erheblichen Maße beeinflusst, da die Ausrichtung des erzeugten Streufächers in erster Linie von der Wurfrichtung der zumindest einen Schleuderscheibe abhängig ist. Somit kann durch die Berücksichtigung der Wurfrichtung der zumindest einen Schleuderscheibe die Streubreite der zumindest einen Schleuderscheibe wesentlich präziser an einen durch eine Streugrenze definierten Streubereich angepasst werden. Die Streugrenze kann dabei beispielsweise eine feldinterne Streugrenze, insbesondere im Bereich des Vorgewendes, oder eine Feldgrenze sein. Die erfasste Streugrenze verläuft vorzugsweise in Bewegungsrichtung des Streugeräts vor dem Streugerät.

Es ist besonders bevorzugt, dass das erfindungsgemäße Verfahren mit einem als Düngerstreuer ausgebildeten Streugerät ausgeführt wird, wobei das als Düngerstreuer ausgebildete Streugerät zwei nebeneinander angeordnete Schleuderscheiben aufweist.

Ferner ist ein erfindungsgemäßes Verfahren bevorzugt, bei welchem die Wurfrichtung, in deren Abhängigkeit der zumindest eine Schaltabstand ermittelt wird, eine eingestellte Soll-Wurfrichtung der zumindest einen Schleuderscheibe des Streugeräts oder eine aktuelle Ist-Wurfrichtung der zumindest einen Schleuderscheibe des Streugeräts ist. Vorzugsweise ist die eingestellte Soll-Wurfrichtung die Richtung, welche der Bediener des Streugeräts zuvor manuell, beispielsweise über eine Eingabeeinrichtung, eingestellt hat. Der Bediener des Streugeräts kann die einzustellende Soll-Wurfrichtung beispielsweise einer Streutabelle entnehmen, welche beispielsweise von dem Hersteller des Streugeräts bereitgestellt wird. Aufgrund verschiedener Einflüsse kann die tatsächlich vorliegende Ist-Wurfrichtung während der Ausbringung des Streuguts von der eingestellten Soll-Wurfrichtung abweichen. Da die aktuelle Ist-Wurfrichtung die Ausrichtung des Streufächers äußerst präzise wiedergibt, kann auch die Ermittlung des zumindest einen Schaltabstands mit einer höheren Präzision erfolgen, wenn dies in Abhängigkeit der aktuellen Ist-Wurfrichtung erfolgt. Vorzugsweise umfasst das erfindungsgemäße Verfahren hierzu das Erfassen der Soll-Wurfrichtung der zumindest einen Schleuderscheibe des Streugeräts und/oder das Erfassen der aktuellen Ist-Wurfrichtung der zumindest einen Schleuderscheibe des Streugeräts.

Ferner ist ein erfindungsgemäßes Verfahren vorteilhaft, bei welchem das Anpassen der Streubreite der zumindest einen Schleuderscheibe, insbesondere mittels einer Teilbreitenschaltung, bei Erreichen des zumindest einen Schaltabstands des Streugeräts zu der Streugrenze das schrittweise Unterbrechen des Streugutauswurfs sämtlicher Schleuderscheiben nach Erreichen eines Schaltabstands des Streugeräts zu einer im Wesentlichen rechtwinklig zu der befahrenen Fahrgasse verlaufenden Streugrenze und/oder das schrittweise Aufheben einer Unterbrechung des Streugutauswurfs sämtlicher Schleuderscheiben nach Erreichen eines Schaltabstands des Streugeräts zu einer im Wesentlichen rechtwinklig zu der befahrenen Fahrgasse verlaufenden Streugrenze umfasst. Wenn die Streubreite der zumindest einen Schleuderscheibe mittels einer Teilbreitenschaltung angepasst wird, umfasst das schrittweise Unterbrechen des Streugutauswurfs sämtlicher Schleuderscheiben das schrittweise Ausschalten sämtlicher Teilbreiten der Teilbreitenschaltung. In diesem Fall umfasst das schrittweise Aufheben einer Unterbrechung des Streugutauswurfs sämtlicher Schleuderscheiben das schrittweise Einschalten sämtlicher Teilbreiten der Teilbreitenschaltung. Wenn das Streubild des Streugeräts eine Parabelform aufweist, bei welcher die zentralen Teilbreiten einer Teilbreitenschaltung den größten Abstand in Fahrtrichtung und die außenliegenden Teilbreiten den kleinsten Abstand in Fahrtrichtung von dem Streugerät aufweisen, ist es bevorzugt, dass beim schrittweisen Unterbrechen des Streugutauswurfs sämtlicher Schleuderscheiben zunächst die außenliegenden Teilbreiten ausgeschaltet werden, wobei darauffolgend auch die seitlich innen von den außenliegenden Teilbreiten angeordneten Teilbreiten zeitlich verzögert und schrittweise abgeschaltet werden bis letztendlich auch die zentralen Teilbreiten ausgeschaltet sind. In diesem Fall ist es außerdem bevorzugt, dass beim schrittweisen Aufheben der Unterbrechung des Streugutauswurfs sämtlicher Schleuderscheiben zunächst die außenliegenden Teilbreiten eingeschaltet werden, wobei darauffolgend auch die seitlich innen von den außenliegenden Teilbreiten angeordneten Teilbreiten zeitlich verzögert und schrittweise eingeschaltet werden bis letztendlich auch die zentralen Teilbreiten eingeschaltet sind. Eine Anpassung der Parabelform des Streubildes kann eine Größenänderung und/oder eine Formveränderung einzelner oder sämtlicher Teilbreiten der Teilbreitenschaltung bedingen. Beispielsweise führt eine Streckung der Parabelform zu Teilbreiten mit einer gesteigerten Länge, wobei zusätzlich der Versatz benachbarter Teilbreiten in Fahrtrichtung vergrößert sein kann. Beispielsweise führt eine Stauchung der Parabelform zu Teilbreiten mit einer verringerten Länge, wobei zusätzlich der Versatz benachbarter Teilbreiten in Fahrtrichtung verkleinert sein kann.

In einer weiteren bevorzugten Ausführungsform des erfindungsgemäßen Verfahrens erfolgt das Anpassen der Streubreite der zumindest einen Schleuderscheibe, insbesondere mittels einer Teilbreitenschaltung, stufenweise bei Erreichen aufeinanderfolgender Schaltabstände des Streugeräts zu einer schräg zur befahrenen Fahrgasse verlaufenden Streugrenze. Insbesondere weist das Streugerät zwei rotierend antreibbare und nebeneinander angeordnete Schleuderscheiben auf, wobei eine Schleuderscheibe auf einer der Streugrenze zugewandten Seite und eine Schleuderscheibe auf einer der Streugrenze abgewandten Seite angeordnet ist. Aufgrund des schrägen Verlaufs der Streugrenze weisen die nebeneinander angeordneten Schleuderscheiben unterschiedliche Abstände zu der Streugrenze auf. Mithin ist es vorteilhaft, wenn beide Schleuderscheiben über unabhängig voneinander steuerbare Teilbreitenschaltungen verfügen, sodass die Anpassung der Streubreite der der Streugrenze abgewandten Schleuderscheibe unabhängig von der Anpassung der Streubreite der der Streugrenze zugewandten Schleuderscheibe erfolgen kann. Insbesondere im Bereich von schräg verlaufenden Streugrenzen können die beiden Schleuderscheiben unterschiedliche Wurfrichtungen aufweisen, sodass die Anpassung des Streugutauswurfs in Abhängigkeit der jeweiligen Wurfrichtungen separat voneinander für jede Schleuderscheibe einzeln zu erfolgen hat.

In einer weiteren bevorzugten Ausführungsform des erfindungsgemäßen Verfahrens werden die bei Erreichen des zumindest einen Schaltabstands zu schaltenden Teilbreiten der Teilbreitenschaltung ermittelt. Das Anpassen der Streubreite der zumindest einen Schleuderscheibe mittels der Teilbreitenschaltung bei Erreichen des zumindest einen Schaltabstands des Streugeräts zu der Streugrenze umfasst das Schalten der zu schaltenden Teilbreiten der Teilbreitenschaltung. Das Schalten einer Teilbreite kann das Ausschalten einer Teilbreite, also das Unterbrechen des Streugutauswurfs in diesem Bereich, und das Einschalten einer Teilbreite, also das Ausführen des Streugutauswurfs in diesem Bereich, umfassen.

Außerdem ist ein erfindungsgemäßes Verfahren vorteilhaft, bei welchem eine Eingabeeinrichtung bereitgestellt wird, mittels welcher durch einen Bediener eine durch das Streugerät einzustellende Wurfrichtung eingebbar ist, eine durch einen Bediener manuell eingestellte Wurfrichtung eingebbar ist, ein oder mehrere durch das Streugerät einzustellende Parameter eingebbar sind, aus welchen die einzustellende Wurfrichtung ermittelbar ist, und/oder eine oder mehrere durch einen Bediener manuell eingestellte Parameter eingebbar sind, aus welchen die eingestellte Wurfrichtung ermittelbar ist. Der eine oder die mehreren durch das Streugerät einzustellenden Parameter und/oder der eine oder die mehreren durch einen Bediener manuell eingestellten Parameter können beispielsweise die Wurfweite, die Arbeitsbreite, den Streuguttyp und/oder Eigenschaften des auszubringenden Streuguts umfassen. Das Verfahren kann beispielsweise in Verbindung mit Streugeräten ausgeführt werden, bei welchen der Bediener den Streugutauswurf manuell einstellen muss. Alternativ oder zusätzlich kann das erfindungsgemäße Verfahren auch in Verbindung mit Streugeräten verwendet werden, bei welchen einzelne oder sämtliche den Streugutauswurf betreffende Geräteparameter automatisch bzw. selbsttätig eingestellt werden. Die Eingabeeinrichtung kann beispielsweise einen Touchscreen, einen oder mehrere Tasten und/oder eine oder mehrere Druckknöpfe umfassen. Ferner kann die Eingabeeinrichtung drucksensitive Eingabeelemente und/oder abstandssensitive Eingabeelemente umfassen, deren Betätigung keine Berührung durch den Bediener erfordern. Außerdem kann die Eingabeeinrichtung dazu eingerichtet sein, Eingabebefehle mittels Spracherkennung zu erfassen. Darüber hinaus kann die Eingabeeinrichtung dazu eingerichtet sein, Eingabebefehle eines Bedieners mittels einer Gestenerkennung zu erfassen.

In einer weiteren Ausführungsform des erfindungsgemäßen Verfahrens wird die Wurfrichtung der zumindest einen Schleuderscheibe auf Grundlage des einen oder der mehreren eingegebenen Parametern, aus welchen die einzustellende oder eingestellte Wurfrichtung ermittelbar ist, ermittelt, insbesondere berechnet. Alternativ oder zusätzlich wird die ermittelte, insbesondere berechnete, Wurfrichtung zur Ermittlung des zumindest einen Schaltabstands bereitgestellt. Das Ermitteln der Wurfrichtung der zumindest einen Schleuderscheibe kann das Ermitteln des Wurfwinkels der zumindest einen Schleuderscheibe umfassen. Der Wurfwinkel entspricht dem Winkel zwischen der Längsachse des Streugeräts und der den Streufächer der zumindest einen Schleuderscheibe halbierenden Achse.

In einer alternativen Ausführungsform des erfindungsgemäßen Verfahrens erfolgt das Ermitteln des zumindest einen Schaltabstands zusätzlich in Abhängigkeit einer eingestellten Streubreite der zumindest einen Schleuderscheibe und/oder einer eingestellten Arbeitsbreite des Streugeräts. Die eingestellte Streubreite prägt den Streufächer der zumindest einen Schleuderscheibe in erheblichem Maße. Somit kann eine weitere Steigerung der Präzision bei der Schaltabstandserfassung umgesetzt werden, wenn auch die eingestellte Streubreite bei der Ermittlung des zumindest einen Schaltabstands berücksichtigt wird. Gleiches gilt in analoger Weise für die Arbeitsbreite des Streugeräts, welche die Streubreite von mehreren, beispielsweise zwei Schleuderscheiben, umfassen kann.

Darüber hinaus ist ein erfindungsgemäßes Verfahren bevorzugt, bei welchem das Ermitteln des zumindest einen Schaltabstands zusätzlich in Abhängigkeit der eingestellten Wurfweite der zumindest einen Schleuderscheibe erfolgt. Alternativ oder zusätzlich erfolgt das Ermitteln des zumindest einen Schaltabstands zusätzlich in Abhängigkeit der eingestellten Drehgeschwindigkeit der zumindest einen Schleuderscheibe und/oder des eingestellten Aufgabepunkts der zumindest einen Schleuderscheibe. Durch die eingestellte Wurfweite wird die Größe des Streufächers erheblich beeinflusst, sodass die Wurfweite auch die flächenbezogene Streugutmenge beeinflusst. Im Bereich von schräg verlaufenden Streugrenzen kann durch die Berücksichtigung der eingestellten Wurfweite somit eine weitere Steigerung der Präzision bei der Schaltabstandsbestimmung umgesetzt werden.

Außerdem ist ein erfindungsgemäßes Verfahren vorteilhaft, bei welchem das Ermitteln des zumindest einen Schaltabstands zusätzlich in Abhängigkeit eines eingestellten Aufgabepunkts des Streuguts auf die zumindest eine Schleuderscheibe und/oder der Parabel des Streufächers des von der zumindest einen Schleuderscheibe ausgeworfenen Streuguts erfolgt. Der Aufgabepunkt des Streuguts auf die zumindest eine Schleuderscheibe kann beispielsweise in radialer Richtung nach innen oder außen oder in Umfangsrichtung im Uhrzeigersinn oder entgegen dem Uhrzeigersinn verändert werden. Die Veränderung des Aufgabepunkts des Streuguts auf die zumindest eine Schleuderscheibe bedingt eine Drehung des Streufächers der zumindest einen Schleuderscheibe und wirkt sich somit auch auf die Wurfrichtung der zumindest einen Schleuderscheibe aus. Die durch den Streufächer ausgebildete Parabel, insbesondere deren Form und Größe, beeinflusst den Streugutauswurf ebenfalls in erheblichem Maße. Die Berücksichtigung dieses Parameters bei der Ermittlung des zumindest einen Schaltabstands führt zu einer weiteren Präzisionssteigerung bei der Ausbringung von Streugut. Mittels einer Verstellung der Auswurfparameter lassen sich unterschiedliche Parabelformen für das Streubild realisieren. Die einstellbaren Parabelformen können sich beispielsweise in der seitlichen Ausdehnung quer zur Fahrtrichtung und/oder in der Ausdehnung in Fahrtrichtung voneinander unterscheiden. Ferner lassen sich gestauchte und gestreckte Parabelformen einstellen, wobei außerdem die Veränderung der Parabelbreite mit zunehmendem Abstand von der Parabelmitte einstellbar sein kann.

Außerdem ist ein erfindungsgemäßes Verfahren bevorzugt, bei welchem eine Streutabelle erzeugt wird, welche Angaben zu einer einzustellenden Wurfrichtung für das Streugut umfasst, wobei das Erzeugen der Streutabelle insbesondere durch den Hersteller des Streugeräts oder einen Drittanbieter erfolgt. Alternativ oder zusätzlich umfasst das erfindungsgemäße Verfahren das Bereitstellen der die Angaben zu der einzustellenden Wurfrichtung für das Streugut umfassenden Streutabelle für den Bediener des Streugeräts, insbesondere durch den Hersteller des Streugeräts oder einen Drittanbieter. Ferner kann das erfindungsgemäße Verfahren das Eingeben einer Angabe zu der einzustellenden Wurfrichtung für das Streugut aus der Streutabelle in eine Eingabeeinrichtung, insbesondere eine Eingabeeinrichtung des Streugeräts oder des das Streugerät ziehenden oder tragenden Fahrzeugs, umfassen. Die Wurfrichtung kann beispielsweise über einen Wurfwinkel eingestellt werden, welcher in der Streutabelle verzeichnet ist. Alternativ kann die Streutabelle auch Angaben zu einer an dem Streugerät angebrachten Skalierung aufweisen, wobei die Skalierung zur Einstellung der Wurfrichtung dient. Die Streutabelle kann dem Bediener beispielsweise als Druckerzeugnis oder einer zum Ausdrucken vorbereiteten Dokumenten-Datei zur Verfügung gestellt werden. Ferner kann das Streugerät oder ein das Streugerät ziehendes oder tragendes Fahrzeug dazu eingerichtet sein, die Streutabelle von einem Zentralrechner, wie etwa einem Server, beispielsweise einem Zentralrechner des Herstellers des Streugeräts oder eines Drittanbieters, abzurufen.

Die der Erfindung zugrunde liegende Aufgabe wird ferner durch ein Streugerät der eingangs genannten Art gelöst, wobei das Streugerät dazu eingerichtet ist, das Verfahren zum Ausbringen von Streugut nach einer der vorstehend beschriebenen Ausführungsformen auszuführen. Hinsichtlich der Vorteile und Modifikationen des erfindungsgemäßen Streugeräts wird auf die Vorteile und Modifikationen des erfindungsgemäßen Verfahrens verwiesen.

Die der Erfindung zugrunde liegende Aufgabe wird ferner durch eine Ausbringkombination der eingangs genannten Art gelöst, wobei die Ausbringkombination dazu eingerichtet ist, das Verfahren zum Ausbringen von Streugut nach einer der vorstehend beschriebenen Ausführungsformen auszuführen. Hinsichtlich der Vorteile und Modifikationen der erfindungsgemäßen Ausbringkombination wird auf die Vorteile und Modifikationen des erfindungsgemäßen Verfahrens verwiesen.

Weitere Einzelheiten der Erfindung sind der Figurenbeschreibung und den Zeichnungen zu entnehmen. Dabei zeigen
- Fig. 1: ein Ausführungsbeispiel eines erfindungsgemäßen Streugeräts beim Ausführen des erfindungsgemäßen Verfahrens;
- Fig. 2: das in der Fig. 1 dargestellte Streugerät beim Ausführen des erfindungsgemäßen Verfahrens; und
- Fig. 3: das in der Fig. 1 dargestellte Streugerät beim Ausführen des erfindungsgemäßen Verfahrens.

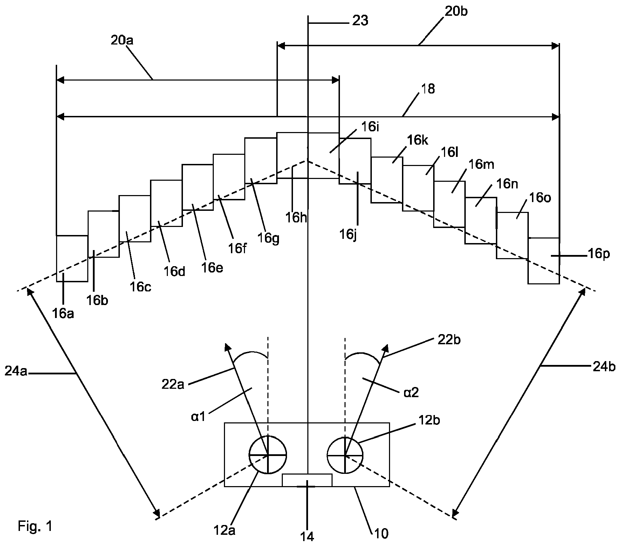

Die Fig. 1 zeigt ein als Düngerstreuer ausgebildetes Streugerät 10 zum Ausbringen von Streugut, nämlich Dünger. Das Streugerät 10 weist zwei rotierend antreibbare und nebeneinander angeordnete Schleuderscheiben 12a, 12b und eine Teilbreitenschaltung 14 auf.

Die Schleuderscheiben 12a, 12b beschleunigen das aufgegebene Streugut und werfen dieses jeweils in einer Wurfrichtung 22a, 22b aus. Die Wurfrichtungen 22a, 22b können beispielsweise über Wurfwinkel α1, α2 definiert werden, wobei die Wurfwinkel α1, α2 den Winkeln zwischen der Längsachse des Streugeräts 10 und der den Streufächer der jeweiligen Schleuderscheibe 12a, 12b halbierenden Achse entsprechen.

Das Streugerät 10 kann beispielsweise von einem als Traktor ausgebildeten Fahrzeug gezogen oder getragen werden, sodass das Fahrzeug und das Streugerät 10 eine Ausbringkombination ausbilden.

Abhängig von der eingestellten Gerätekonfiguration und des auszubringenden Streuguts, wird das Streugut von den Schleuderscheiben 12a, 12b jeweils bis zu einer Wurfweite 24a, 24b ausgeworfen. Die Wurfweiten 24a, 24b sind entlang der jeweiligen Streubreiten 20a, 20b der Schleuderscheiben 12a, 12b konstant. Dies ist in den Figuren vereinfacht und schematisch dargestellt.

Die Streubreiten 20a, 20b der Schleuderscheiben 12a, 12b überlappen sich in einem zentralen Bereich des Streugutauswurfs. Die Streubreiten 20a, 20b der Schleuderscheiben 12a, 12b sowie deren Überlappungsbereich definieren auch die eingestellte Arbeitsbreite 18 des Streugeräts 10. Die Arbeitsbreite 18 ist unterteilt in mehrere Teilbreiten 16a-16p, welche durch die Teilbreitenschaltung 14 von der Ausbringung von Streugut temporär ausgeschlossen werden können. Die Teilbreitenschaltung 14 ist dazu eingerichtet, die Arbeitsbreite 18 des Streugeräts 10 durch Anpassung der Streubreite 20a, 20b der Schleuderscheiben 12a, 12b über ein Ein- und Ausschalten einer oder mehrerer Teilbreiten 16a-16p einzustellen.

Das Streugerät 10 und/oder das das Streugerät 10 tragende oder ziehende Fahrzeug ist dazu eingerichtet, eine Streugrenze zu erfassen, welche eine Anpassung der Streubreite 20a, 20b einer Schleuderscheibe 12a, 12b und/oder beider Schleuderscheiben 12a, 12b des Streugeräts 10 während des Befahrens einer Fahrgasse erfordert. Die Streugrenze kann beispielsweise eine Feldkante oder eine feldinterne Streugrenze, etwa im Bereich des Vorgewendes, sein.

Nachdem die Streugrenze erfasst wurde, wird ein oder werden mehrere Schaltabstände ermittelt, bei deren Erreichen die Teilbreitenschaltung 14 eine oder mehrere Teilbreiten 16a-16p ausschaltet, sodass eine Fehlausbringung im Bereich der Streugrenze vermieden wird. Die Ermittlung des einen oder der mehreren Schaltabstände erfolgt in Abhängigkeit der Wurfrichtungen 22a, 22b der Schleuderscheiben 12a, 12b des Streugeräts 10.

Die Wurfrichtungen 22a, 22b, in deren Abhängigkeit der eine oder die mehreren Schaltabstände ermittelt werden, sind die von einem Bediener eingestellten Soll-Wurfrichtungen der Schleuderscheiben 12a, 12b des Streugeräts 10. Damit der Bediener die für den Ausbringvorgang geeigneten Wurfrichtungen 22a, 22b eingeben kann, weist das Streugerät 10 oder das das Streugerät 10 tragende oder ziehende Fahrzeug eine Eingabeeinrichtung, wie etwa einen Touchscreen, auf. Alternativ oder zusätzlich können die Wurfrichtungen 22a, 22b der Schleuderscheiben 12a, 12b durch das Streugerät 10 oder das das Streugerät 10 tragende oder ziehende Fahrzeug auch auf Grundlage von einem oder mehreren Parametern berechnet werden, beispielsweise, wenn das Streugerät 10 dazu eingerichtet ist, selbsttätig geeignete Wurfrichtungen 22a, 22b an den Schleuderscheiben 12a 12b einzustellen.

Nachdem der eine oder die mehreren Schaltabstände ermittelt wurden, kann bei Erreichen des einen oder der mehreren Schaltabstände die Streubreite 20a, 20b einer Schleuderscheibe 12a, 12b oder beider Schleuderscheiben 12a, 12b mittels der Teilbreitenschaltung 14 angepasst werden.

Das Anpassen der Streubreite 20a, 20b der Schleuderscheiben 12a, 12b mittels der Teilbreitenschaltung 14 erfolgt beispielsweise bei einer schräg zur Fahrgasse verlaufenden Streugrenze stufenweise. Hierfür werden die bei Erreichen einzelner Schaltabstände zu schaltenden Teilbreiten 16a-16p der Teilbreitenschaltung 14 ermittelt, sodass die jeweiligen Teilbreiten 16a-16p bei Erreichen aufeinanderfolgender Schaltabstände des Streugeräts 10 zu der schräg zur befahrenen Fahrgasse verlaufenden Streugrenze abgeschaltet werden können.

Das Ermitteln der einen oder mehreren Schaltabstände kann zusätzlich in Abhängigkeit der eingestellten Streubreiten 20a, 20b der Schleuderscheiben 12a, 12b, der eingestellten Arbeitsbreite 18 des Streugeräts 10, der eingestellten Wurfweiten 24a, 24b der Schleuderscheiben 12a, 12b, der eingestellten Aufgabepunkte des Streuguts auf die Schleuderscheiben 12a, 12b und/oder der Parabelform der Streufächer des von den Schleuderscheiben 12a, 12b ausgeworfenen Streuguts erfolgen.

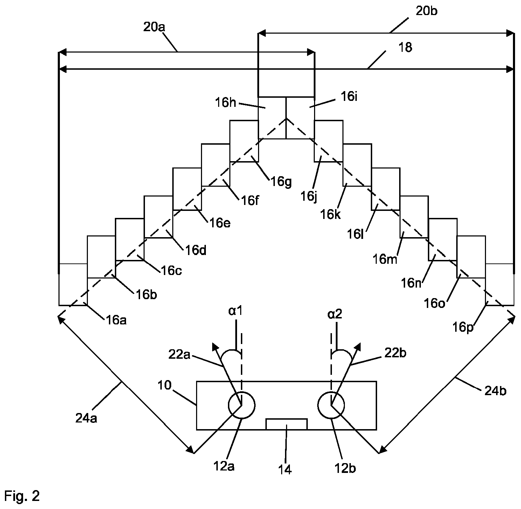

In dem in der Fig. 2 dargestellten Zustand weisen die Schleuderscheiben 12a, 12b jeweils abweichende Wurfrichtungen 22a, 22b, Wurfwinkel α1, α2 und Wurfweiten 24a, 24b gegenüber dem in der Fig. 1 dargestellten Zustand auf. Die geänderten Auswurfparameter können beispielsweise durch die Anpassung des Streubildes an ein anderes Streugut entstehen.

Die geänderten Auswurfparameter führen zu einem an beiden Seiten weiter nach außen und nach vorne gelagerten Streufächer des Streugeräts 10, woraus sich auch eine gegenüber dem in der Fig. 1 dargestellten Zustand veränderte Parabelform des Streubildes ergibt. Aus der geänderten Parabelform des Streubildes resultiert auch eine veränderte Ausrichtung der Teilbreiten 16a-16p der Teilbreitenschaltung 14. Die Streckung der Parabelform führt zu Teilbreiten 16a-16p, welche gegenüber den in der Fig. 1 dargestellten Teilbreiten 16a-16p eine gesteigerte Länge aufweisen, wobei zusätzlich der Versatz benachbarter Teilbreiten 16a-16p in Fahrtrichtung vergrößert ist.

Damit die Schaltung der Teilbreiten 16a-16p in einem Bereich einer Streugrenze weiterhin zu einer gleichmäßigen und gleichzeitig präzisen Ausbringung des Streuguts führt, wird bei der Ermittlung der Schaltabstände der neue Zustand des Streugeräts 10 berücksichtigt. Dies geschieht immer dann, wenn bewusst die Konfiguration des Streubildes modifiziert wird. Die Schaltabstände werden hierzu in Abhängigkeit der Wurfrichtungen 22a, 22b und der Wurfweiten 24a, 24b der Schleuderscheiben 12a, 12b und der Arbeitsbreite 18 des Streugeräts 10 ermittelt.

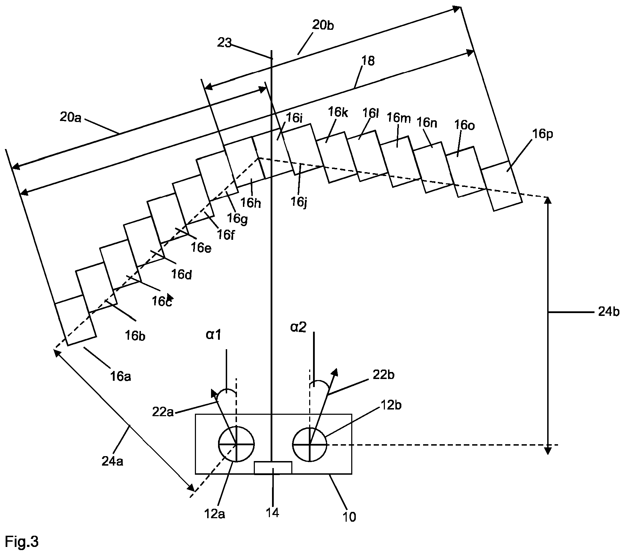

In dem in der Fig. 3 dargestellten Zustand weisen die Schleuderscheiben 12a, 12b jeweils abweichende Wurfrichtungen 22a, 22b und Wurfwinkel α1, α2 gegenüber dem in der Fig. 1 dargestellten Zustand auf. Außerdem weicht die Wurfweite 24a der Schleuderscheibe 12a nunmehr von der Wurfweite 24b der Schleuderscheibe 12b ab. Diese Änderungen wurden auf Grund der Umkonfiguration des Streufächers des Streugeräts 10 zur Anpassung an eine andere Situation durchgeführt. Das dargestellte Eindrehen des gesamten Streufächers des Streugeräts 10 durch die Veränderung der Wurfrichtungen 22a, 22b und der Wurfwinkel α1, α2 könnte beispielsweise zur Anpassung des Streubildes des Streugeräts 10 während einer Kurvenfahrt des Streugeräts 10 erfolgen.

Die geänderten Auswurfparameter führen zu einem seitlich verdrehten Streufächer des Streugeräts 10, woraus sich auch eine gegenüber dem in der Fig. 1 dargestellten Zustand veränderte Ausrichtung der Teilbreiten 16a-16p der Teilbreitenschaltung 14 ergibt.

Damit die Schaltung der Teilbreiten 16a-16p in einem Bereich einer Streugrenze weiterhin zu einer gleichmäßigen und gleichzeitig präzisen Ausbringung des Streuguts führt, wird bei der Ermittlung der Schaltabstände der neue Zustand des Streugeräts 10 berücksichtigt. Dies geschieht immer dann, wenn bewusst die Konfiguration des Streubildes modifiziert wird und erfolgt dadurch, dass die Schaltabstände in Abhängigkeit der Wurfrichtungen 22a, 22b und der Wurfweiten 24a, 24b der Schleuderscheiben 12a, 12b und der Arbeitsbreite 18 des Streugeräts 10 ermittelt werden.

### Bezugszeichenliste

- 10: Streugerät
- 12a, 12b: Schleuderscheiben
- 14: Teilbreitenschaltung
- 16a-16p: Teilbreiten
- 18: Arbeitsbreite
- 20a, 20b: Streubreiten
- 22a, 22b: Wurfrichtungen
- 24a, 24b: Wurfweiten

- α1, α2: Wurfwinkel

## Patentansprüche

1. Verfahren zum Ausbringen von Streugut durch ein Streugerät (10), mit den Schritten:
- Erfassen einer Streugrenze, welche eine Anpassung der Streubreite (20a, 20b) zumindest einer Schleuderscheibe (12a, 12b) des Streugeräts (10) während des Befahrens von zumindest einer Fahrgasse erfordert; und
- Anpassen der Streubreite (20a, 20b) der zumindest einen Schleuderscheibe (12a, 12b), insbesondere mittels einer Teilbreitenschaltung (14), bei Erreichen zumindest eines Schaltabstands des Streugeräts (10) zu der Streugrenze;
- Ermitteln des zumindest einen Schaltabstands in Abhängigkeit einer Wurfrichtung (22a, 22b) der zumindest einen Schleuderscheibe (12a, 12b) des Streugeräts (10) durch das Streugerät oder durch eine das Streugerät (10) und ein das Streugerät (10) ziehendes oder tragendes Fahrzeug umfassende Ausbringkombination, **dadurch gekennzeichnet, dass** die Wurfrichtung (22a ,22b), in deren Abhängigkeit der zumindest eine Schaltabstand ermittelt wird, eine eingestellte Soll-Wurfrichtung der zumindest einen Schleuderscheibe (12a, 12b) des Streugeräts (10) oder eine aktuelle Ist-Wurfrichtung der zumindest einen Schleuderscheibe (12a, 12b) des Streugeräts (10) ist.

2. Verfahren nach Anspruch 1,
**dadurch gekennzeichnet, dass** die Wurfrichtung (22a, 22b), in deren Abhängigkeit der zumindest eine Schaltabstand ermittelt wird, eine eingestellte Soll-Wurfrichtung der zumindest einen Schleuderscheibe (12a, 12b) des Streugeräts (10) oder eine aktuelle Ist-Wurfrichtung der zumindest einen Schleuderscheibe (12a, 12b) des Streugeräts (10) ist.

3. Verfahren nach Anspruch 1 oder 2,
**dadurch gekennzeichnet, dass** das Anpassen der Streubreite (20a, 20b) der zumindest einen Schleuderscheibe (12a, 12b), insbesondere mittels einer Teilbreitenschaltung (14), bei Erreichen des zumindest einen Schaltabstands des Streugeräts (10) zu der Streugrenze zumindest einen der folgenden Schritte umfasst:
- schrittweises Unterbrechen des Streugutauswurfs sämtlicher Schleuderscheiben (12a, 12b) nach Erreichen eines Schaltabstands des Streugeräts (10) zu einer im Wesentlichen rechtwinklig zu der befahrenen Fahrgasse verlaufenden Streugrenze;
- schrittweises Aufheben einer Unterbrechung des Streugutauswurfs sämtlicher Schleuderscheiben (12a, 12b) nach Erreichen eines Schaltabstands des Streugeräts (10) zu einer im Wesentlichen rechtwinklig zu der befahrenen Fahrgasse verlaufenden Streugrenze.

4. Verfahren nach einem der vorstehenden Ansprüche,
**dadurch gekennzeichnet, dass** das Anpassen der Streubreite (20a, 20b) der zumindest einen Schleuderscheibe (12a, 12b), insbesondere mittels einer Teilbreitenschaltung (14), stufenweise bei Erreichen aufeinanderfolgender Schaltabstände des Streugeräts (10) zu einer schräg zur befahrenen Fahrgasse verlaufenden Streugrenze erfolgt.

5. Verfahren nach einem der vorstehenden Ansprüche,
**dadurch gekennzeichnet, dass** das Anpassen der Streubreite (20a, 20b) der zumindest einen Schleuderscheibe (12a, 12b) mittels der Teilbreitenschaltung (14) erfolgt und das Verfahren ferner den folgenden Schritt umfasst:
- Ermitteln der bei Erreichen des zumindest einen Schaltabstands zu schaltenden Teilbreiten der Teilbreitenschaltung (14),
wobei das Anpassen der Streubreite (20a, 20b) der zumindest einen Schleuderscheibe (12a, 12b) mittels der Teilbreitenschaltung (14) bei Erreichen des zumindest einen Schaltabstands des Streugeräts (10) zu der Streugrenze das Schalten der zu schaltenden Teilbreiten der Teilbreitenschaltung (14) umfasst.

6. Verfahren nach einem der vorstehenden Ansprüche,
**gekennzeichnet durch** den Schritt:
- Bereitstellen einer Eingabeeinrichtung, mittels welcher durch einen Bediener
- eine durch das Streugerät (10) einzustellende Wurfrichtung (22a, 22b) eingebbar ist;
- eine durch einen Bediener manuell eingestellte Wurfrichtung (22a, 22b) eingebbar ist;
- ein oder mehrere durch das Streugerät (10) einzustellende Parameter eingebbar sind, aus welchen die einzustellende Wurfrichtung (22a, 22b) ermittelbar ist; und/oder
- ein oder mehrere durch einen Bediener manuell eingestellte Parameter eingebbar sind, aus welchen die eingestellte Wurfrichtung (22a, 22b) ermittelbar ist.

7. Verfahren nach Anspruch 6,
**gekennzeichnet durch** zumindest einen der folgenden Schritte:
- Ermitteln, insbesondere Berechnen, der Wurfrichtung (22a, 22b) der zumindest einen Schleuderscheibe (12a, 12b) auf Grundlage des einen oder der mehreren eingegeben Parameter, aus welchen die einzustellende oder eingestellte Wurfrichtung (22a, 22b) ermittelbar ist;
- Bereitstellen der ermittelten, insbesondere berechneten, Wurfrichtung (22a, 22b) zur Ermittlung des zumindest einen Schaltabstands.

8. Verfahren nach einem der vorstehenden Ansprüche,
**dadurch gekennzeichnet, dass** das Ermitteln des zumindest einen Schaltabstands zusätzlich in Abhängigkeit einer eingestellten Streubreite (20a, 20b) der zumindest einen Schleuderscheibe (12a, 12b) und/oder einer eingestellten Arbeitsbreite (18) des Streugeräts (10) erfolgt.

9. Verfahren nach einem der vorstehenden Ansprüche,
**dadurch gekennzeichnet, dass** das Ermitteln des zumindest einen Schaltabstands zusätzlich in Abhängigkeit einer eingestellten Wurfweite (24a, 24b) der zumindest einen Schleuderscheibe (12a, 12b) erfolgt.

10. Verfahren nach einem der vorstehenden Ansprüche,
**dadurch gekennzeichnet, dass** das Ermitteln des zumindest einen Schaltabstands zusätzlich in Abhängigkeit eines eingestellten Aufgabepunkts des Streuguts auf die zumindest eine Schleuderscheibe (12a, 12b) und/oder der Parabelform des Streufächers des von der zumindest einen Schleuderscheibe (12a, 12b) ausgeworfenen Streuguts erfolgt.

11. Verfahren nach einem der vorstehenden Ansprüche,
**gekennzeichnet durch** zumindest einen der folgenden Schritte:
- Erzeugen einer Streutabelle, welche Angaben zu einer einzustellenden Wurfrichtung (22a, 22b) für das Streuguts umfasst, insbesondere durch den Hersteller des Streugeräts (10) oder einen Drittanbieter;
- Bereitstellen der die Angaben zu der einzustellenden Wurfrichtung (22a, 22b) für das Streugut umfassenden Streutabelle für den Bediener des Streugeräts (10), insbesondere durch den Hersteller des Streugeräts (10) oder einen Drittanbieter;
- Eingeben einer Angabe zu der einzustellenden Wurfrichtung (22a, 22b) für das Streugut aus der Streutabelle in eine Eingabeeinrichtung, insbesondere eine Eingabeeinrichtung des Streugeräts (10) oder des das Streugerät (10) ziehenden oder tragenden Fahrzeugs.

12. Streugerät (10) zum Ausbringen von Streugut, insbesondere Düngerstreuer, mit
- zumindest einer rotierend antreibbaren Schleuderscheibe (12a, 12b);
**dadurch gekennzeichnet, dass** das Streugerät (10) Mitteln umfasst, welche dazu eingerichtet sind, das Verfahren zum Ausbringen von Streugut nach einem der vorstehenden Ansprüche auszuführen.

13. Ausbringkombination, mit
- einem Streugerät (10) zum Ausbringen von Streugut mit zumindest einer rotierend antreibbaren Schleuderscheibe (12a, 12b), welches insbesondere als Düngerstreuer ausgebildet ist; und
- einem das Streugerät (10) ziehenden oder tragenden Fahrzeug, welches insbesondere als Traktor ausgebildet ist,
**dadurch gekennzeichnet, dass** die Ausbringkombination Mitteln umfasst, welche dazu eingerichtet sind, das Verfahren zum Ausbringen von Streugut nach einem der Ansprüche 1 bis 11 auszuführen.

## Claims

1. Method for applying spreading material by means of a spreader (10), comprising the steps of:
- detecting a spreading limit which requires an adjustment of the spreading width (20a, 20b) of at least one centrifugal disc (12a, 12b) of the spreader (10) while traveling along at least one tramline; and
- adjusting the spreading width (20a, 20b) of the at least one centrifugal disc (12a, 12b), in particular by means of a partial-width control system (14), when at least one switching distance of the spreader (10) to the spreading limit is reached;
- determining the at least one switching distance depending on a throwing direction (22a, 22b) of the at least one centrifugal disc (12a, 12b) of the spreader (10) by means of the spreader or by means of an application combination comprising the spreader (10) and a vehicle pulling or carrying the spreader (10),
**characterized in that** the throwing direction (22a, 22b), depending on which the at least one switching distance is determined, is a set target throwing direction of the at least one centrifugal disc (12a, 12b) of the spreader (10) or a current actual throwing direction of the at least one centrifugal disc (12a, 12b) of the spreader (10).

2. Method according to claim 1,
**characterized in that** the throwing direction (22a, 22b), depending on which the at least one switching distance is determined, is a set target throwing direction of the at least one centrifugal disc (12a, 12b) of the spreader (10) or a current actual throwing direction of the at least one centrifugal disc (12a, 12b) of the spreader (10).

3. Method according to either claim 1 or claim 2,
**characterized in that** adjusting the spreading width (20a, 20b) of the at least one centrifugal disc (12a, 12b), in particular by means of a partial-width control system (14), when the at least one switching distance of the spreader (10) to the spreading limit is reached, comprises at least one of the following steps:
- gradually interrupting the spreading material ejection of all centrifugal discs (12a, 12b) after reaching a switching distance of the spreader (10) to a spreading limit extending substantially orthogonally to the tramline being traveled along;
- gradually removing an interruption to the spreading material ejection of all centrifugal discs (12a, 12b) after a switching distance of the spreader (10) to a spreading limit extending substantially orthogonally to the tramline being traveled along is reached.

4. Method according to any of the preceding claims,
**characterized in that** the adjustment of the spreading width (20a, 20b) of the at least one centrifugal disc (12a, 12b), in particular by means of a partial-width control system (14), takes place step by step when successive switching distances of the spreader (10) to a spreading limit extending obliquely to the tramline being traveled along are reached.

5. Method according to any of the preceding claims,
**characterized in that** the adjustment of the spreading width (20a, 20b) of the at least one centrifugal disc (12a, 12b) is carried out by means of the partial-width control system (14), and the method further comprises the following step:
- determining the partial-widths of the partial-width control system (14) that are to be switched when the at least one switching distance is reached,
wherein the adjustment of the spreading width (20a, 20b) of the at least one centrifugal disc (12a, 12b) by means of the partial-width control system (14) when the at least one switching distance of the spreader (10) to the spreading limit is reached comprises switching the partial-widths of the partial-width control system (14) that are to be switched.

6. Method according to any of the preceding claims,
**characterized by** the step of:
- providing an input device by means of which an operator
- can input a throwing direction (22a, 22b) to be set by the spreader (10);
- can input a throwing direction (22a, 22b) set manually by an operator;
- can input one or more parameters to be set by the spreader (10), from which the throwing direction (22a, 22b) to be set can be determined; and/or
- can input one or a plurality of parameters set manually by an operator, from which the set throwing direction (22a, 22b) can be determined.

7. Method according to claim 6,
**characterized by** at least one of the following steps:
- determining, in particular calculating, the throwing direction (22a, 22b) of the at least one centrifugal disc (12a, 12b) on the basis of the one or more input parameters from which the throwing direction (22a, 22b) that is to be set or is set can be determined;
- providing the determined, in particular calculated, throwing direction (22a, 22b) for determining the at least one switching distance.

8. Method according to any of the preceding claims,
**characterized in that** the determination of the at least one switching distance is additionally carried out on the basis of a set spreading width (20a, 20b) of the at least one centrifugal disc (12a, 12b) and/or a set working width (18) of the spreader (10).

9. Method according to any of the preceding claims,
**characterized in that** the determination of the at least one switching distance is additionally carried out on the basis of a set throwing distance (24a, 24b) of the at least one centrifugal disc (12a, 12b).

10. Method according to any of the preceding claims,
**characterized in that** the determination of the at least one switching distance is additionally carried out on the basis of a set point of application of the spreading material onto the at least one centrifugal disc (12a, 12b) and/or the parabolic shape of the spreading fan of the spreading material ejected by the at least one centrifugal disc (12a, 12b).

11. Method according to any of the preceding claims,
**characterized by** at least one of the following steps:
- generating a spreading table which comprises information on a throwing direction (22a, 22b) to be set for the spreading material, in particular by the manufacturer of the spreader (10) or a third party provider;
- providing the spreading table containing the information on the throwing direction (22a, 22b) to be set for the spreading material to the operator of the spreader (10), in particular by the manufacturer of the spreader (10) or a third party provider;
- inputting information on the throwing direction (22a, 22b) to be set for the spreading material from the spreading table into an input device, in particular an input device of the spreader (10) or of the vehicle pulling or carrying the spreader (10).

12. Spreader (10) for applying spreading material, in particular a fertilizer spreader, having
- at least one rotationally drivable centrifugal disc (12a, 12b);
**characterized in that** the spreader (10) comprises means which are designed to execute the method for applying spreading material according to any of the preceding claims.

13. Application combination, having
- a spreader (10) for applying spreading material, having at least one rotationally drivable centrifugal disc (12a, 12b) which is in particular designed as a fertilizer spreader; and
- a vehicle pulling or carrying the spreader (10), which is in particular designed as a tractor,
**characterized in that** the application combination comprises means which are designed to carry out the method for applying spreading material according to any of claims 1 to 11.

## Revendications

1. Procédé d'épandage de produit d'épandage au moyen d'une épandeuse (10), comprenant les étapes de :
- détection d'une limite d'épandage qui nécessite une adaptation de la largeur d'épandage (20a, 20b) d'au moins un disque d'épandage (12a, 12b) de l'épandeuse (10) pendant le parcours sur au moins une voie de circulation ; et
- adaptation de la largeur d'épandage (20a, 20b) de l'au moins un disque d'épandage (12a, 12b), en particulier au moyen d'une commutation de tronçons (14), lorsqu'au moins une distance de commutation de l'épandeuse (10) par rapport à la limite d'épandage est atteinte ;
- détermination de l'au moins une distance de commutation en fonction d'une direction de projection (22a, 22b) de l'au moins un disque d'épandage (12a, 12b) de l'épandeuse (10) par l'épandeuse ou par une combinaison d'épandage comprenant l'épandeuse (10) et un véhicule tirant ou portant l'épandeuse (10),
**caractérisé en ce que** la direction de projection (22a, 22b), en fonction de laquelle l'au moins une distance de commutation est déterminée, est une direction de projection de consigne réglée de l'au moins un disque d'épandage (12a, 12b) de l'épandeuse (10) ou une direction de projection réelle actuelle de l'au moins un disque d'épandage (12a, 12b) de l'épandeuse (10).

2. Procédé selon la revendication 1,
**caractérisé en ce que** la direction de projection (22a, 22b), en fonction de laquelle l'au moins une distance de commutation est déterminée, est une direction de projection de consigne réglée de l'au moins un disque d'épandage (12a, 12b) de l'épandeuse (10) ou une direction de projection réelle actuelle de l'au moins un disque d'épandage (12a, 12b) de l'épandeuse (10).

3. Procédé selon la revendication 1 ou 2,
**caractérisé en ce que** l'adaptation de la largeur d'épandage (20a, 20b) de l'au moins un disque d'épandage (12a, 12b), en particulier au moyen d'une commutation de tronçons (14), lorsque l'au moins une distance de commutation de l'épandeuse (10) par rapport à la limite d'épandage est atteinte, comprend au moins l'une des étapes suivantes :
- interruption progressive de l'éjection du produit d'épandage de tous les disques d'épandage (12a, 12b) après avoir atteint une distance de commutation de l'épandeuse (10) par rapport à une limite d'épandage s'étendant sensiblement à angle droit par rapport à la voie de circulation parcourue ;
- suppression progressive d'une interruption de l'éjection du produit d'épandage de tous les disques d'épandage (12a, 12b) après avoir atteint une distance de commutation de l'épandeuse (10) par rapport à une limite d'épandage s'étendant sensiblement à angle droit par rapport à la voie de circulation parcourue.

4. Procédé selon l'une des revendications précédentes,
**caractérisé en ce que** l'adaptation de la largeur d'épandage (20a, 20b) de l'au moins un disque d'épandage (12a, 12b), en particulier au moyen d'une commutation de tronçons (14), s'effectue par étapes lorsque des distances de commutation successives de l'épandeuse (10) sont atteintes par rapport à une limite d'épandage s'étendant en oblique par rapport à la voie de circulation parcourue.

5. Procédé selon l'une des revendications précédentes,
**caractérisé en ce que** l'adaptation de la largeur d'épandage (20a, 20b) de l'au moins un disque d'épandage (12a, 12b) est effectuée au moyen de la commutation de tronçons (14) et le procédé comprend en outre l'étape suivante :
- détermination des tronçons de la commutation de tronçons (14) à commuter lorsque l'au moins une distance de commutation est atteinte,
dans lequel l'adaptation de la largeur d'épandage (20a, 20b) de l'au moins un disque d'épandage (12a, 12b) au moyen de la commutation de tronçons (14) comprend, lorsque l'au moins une distance de commutation de l'épandeuse (10) par rapport à la limite d'épandage est atteinte, la commutation des tronçons à commuter de la commutation de tronçons (14).

6. Procédé selon l'une des revendications précédentes,
**caractérisé par** l'étape de :
- mise à disposition d'un dispositif de saisie, au moyen duquel un opérateur peut
- saisir une direction de projection (22a, 22b) à régler par l'épandeuse (10) ;
- saisir une direction de projection (22a, 22b) réglée manuellement par un opérateur ;
- saisir un ou plusieurs paramètres à régler par l'épandeuse (10), à partir desquels la direction de projection (22a, 22b) à régler peut être déterminée ; et/ou
- saisir un ou plusieurs paramètres réglés manuellement par un opérateur, à partir desquels la direction de projection (22a, 22b) réglée peut être déterminée.

7. Procédé selon la revendication 6,
**caractérisé par** au moins l'une des étapes suivantes :
- détermination, en particulier calcul, de la direction de projection (22a, 22b) de l'au moins un disque d'épandage (12a, 12b) sur la base de l'un ou des plusieurs paramètres saisis, à partir desquels la direction de projection (22a, 22b) à régler ou réglée peut être déterminée ;
- mise à disposition de la direction de projection (22a, 22b) déterminée, en particulier calculée, pour la détermination de l'au moins une distance de commutation.

8. Procédé selon l'une des revendications précédentes,
**caractérisé en ce que** la détermination de l'au moins une distance de commutation s'effectue en outre en fonction d'une largeur d'épandage (20a, 20b) réglée de l'au moins un disque d'épandage (12a, 12b) et/ou d'une largeur de travail (18) réglée de l'épandeuse (10).

9. Procédé selon l'une des revendications précédentes,
**caractérisé en ce que** la détermination de l'au moins une distance de commutation s'effectue en outre en fonction d'une distance de projection (24a, 24b) réglée de l'au moins un disque d'épandage (12a, 12b).

10. Procédé selon l'une des revendications précédentes,
**caractérisé en ce que** la détermination de l'au moins une distance de commutation s'effectue en outre en fonction d'un point de chargement réglé du produit d'épandage sur l'au moins un disque d'épandage (12a, 12b) et/ou de la forme parabolique du compartiment d'épandage du produit d'épandage projeté par l'au moins un disque d'épandage (12a, 12b).

11. Procédé selon l'une des revendications précédentes,
**caractérisé par** au moins l'une des étapes suivantes :
- création d'un tableau d'épandage qui comprend des indications sur une direction de projection (22a, 22b) à régler pour le produit d'épandage, en particulier par le fabricant de l'épandeuse (10) ou un fournisseur tiers ;
- mise à disposition du tableau d'épandage comprenant les indications sur la direction de projection (22a, 22b) à régler pour le produit d'épandage pour l'opérateur de l'épandeuse (10), en particulier par le fabricant de l'épandeuse (10) ou un fournisseur tiers ;
- saisie d'une indication sur la direction de projection (22a, 22b) à régler pour le produit d'épandage à partir du tableau d'épandage dans un dispositif de saisie, en particulier un dispositif de saisie de l'épandeuse (10) ou du véhicule tirant ou portant l'épandeuse (10).

12. Épandeuse (10) destinée à épandre du produit d'épandage, en particulier épandeuse d'engrais, comportant
- au moins un disque d'épandage (12a, 12b) pouvant être entraîné en rotation ;
**caractérisée en ce que** l'épandeuse (10) comprend des moyens conçus pour mettre en oeuvre le procédé destiné à épandre un produit d'épandage selon l'une des revendications précédentes.

13. Combinaison d'épandage, comportant
- une épandeuse (10) destinée à épandre du produit d'épandage, comportant au moins un disque d'épandage (12a, 12b) pouvant être entraîné en rotation, qui est conçue en particulier comme une épandeuse d'engrais ; et
- un véhicule tirant ou portant l'épandeuse (10), qui est en particulier conçu comme un tracteur,
**caractérisée en ce que** la combinaison d'épandage comprend des moyens conçus pour mettre en oeuvre le procédé d'épandage de produit d'épandage selon l'une des revendications 1 à 11.
